# EUROPÄISCHE PATENTSCHRIFT

(11) **EP 2 514 547 B1**
(45) Veröffentlichungstag und Bekanntmachung des Hinweises auf die Patenterteilung: **08.04.2015**
(21) Anmeldenummer: 12164731.7
(22) Anmeldetag: 19.04.2012
(51) Int. Cl.: B23K 9/12, B23K 9/28, B23K 7/10, B23K 26/04, B23K 5/24, B25J 9/16

(54) **Vorrichtung für die thermische Bearbeitung eines Werkstücks**
Apparatus for the thermal processing of a workpiece
Dispositif pour le traitement thermique d'une pièce usinée

(30) Priorität: 21.04.2011 DE 102011018648
(43) Veröffentlichungstag der Anmeldung: 24.10.2012
(73) Patentinhaber: Messer Cutting Systems GmbH, 64823 Gross-Umstadt (DE)
(72) Erfinder: WOLF, Tobias, 63853 Moemlingen (DE); DUENZKOFER, Thomas, 64823 Gross-Umstadt (DE)
(74) Vertreter: Staudt, Armin Walter

(56) Entgegenhaltungen:
- EP-A1- 1 762 328
- EP-A1- 1 977 850
- JP-A- 2005 106 866
- JP-A- 2008 068 308
- JP-A- 2011 071 351
- US-A- 2 747 152
- US-A- 5 201 453
- US-A1- 2010 044 355
- US-A1- 2011 026 016
- US-B2- 6 563 130

## Beschreibung

Die vorliegende Erfindung betrifft eine Vorrichtung für die thermische Bearbeitung eines Werkstücks mit einem senkrecht zur Werkstückoberfläche verstellbaren thermischen Bearbeitungswerkzeug, und mit einem Antrieb zur Einstellung eines Arbeitsabstands, wobei der Antrieb zur Arbeitsabstandseinstellung mit dem Bearbeitungswerkzeug oder einem Teil desselben in Wirkverbindung steht, und als Tauchspulenantrieb ausgebildet ist, aufweisend einen Magneten, der ein Magnetfeld erzeugt, und mit einer im Magnetfeld angeordneten Spule, wobei Magnet und Spule in Abhängigkeit von einem elektrischen Strom relativ zueinander entlang einer Bewegungsachse bewegbar sind.

Die thermische Bearbeitung von Werkstücken umfasst insbesondere das Schweißen, Schneiden sowie die Oberflächenbearbeitung zum Erzeugen von Markierungen. Je nach der sich stellenden Aufgabe werden unterschiedliche Bearbeitungsmaschinen und verschiedene Arten von Bearbeitungswerkzeugen eingesetzt. Für das thermische Schneiden von Werkstücken stehen verschiedene Bearbeitungswerkzeuge wie Autogenbrenner, Plasmabrenner oder Laser zur Verfügung.

Das thermische Schneiden von Werkstoffen unter Verwendung eines Autogenbrenners erfolgt durch den kombinierten Einsatz eines Brenngas- und eines Sauerstoffgasstrahls. Dabei erfolgt die Materialtrennung, indem der Werkstoff im Bereich der Schneidfront durch die Verbrennungswärme aufgeschmolzen und durch den Schneidgasstrahl aus der Schneidfront ausgetrieben wird.

Das thermische Schneiden von Werkstoffen mittels Laserstrahl erfolgt durch den kombinierten Einsatz eines fokussierten Laserstrahls und eines Gasstrahls. Je nach Trennmechanismus wird dabei zwischen Laserstrahl-Schmelzschneiden, Laserstrahl-Verdampfungsschneiden oder Laser-Brennschneiden unterschieden. Für ein präzises Schneiden eines Werkstückes ist die Einhaltung eines vorgegebenen Abstands zwischen dem Schneidwerkzeug und dem Werkstück von Bedeutung. Der optimale Abstand hängt von verschiedenen Faktoren ab, zu denen beispielsweise die Werkstückqualität und die Werkstückdicke zählen. Dies gilt sowohl für das Schneiden mittels Autogenbrenner, bei dem die von dem Brenner erzeugte Flamme eine charakteristische Temperaturverteilung aufweist, als auch für die Fokuslage des Laserstrahls beim thermischen Schneiden mittels Laserstrahl.

### Stand der Technik

Zur Einstellung und Konstanthaltung des optimalen Abstandes sind eine Vielzahl von Verfahren und Vorrichtungen bekannt.

Beispielsweise ist aus der DE 195 03 758 A1 eine Antriebsvorrichtung für die Höhenverstellung eines Brenners einer Brennschneidmaschine bekannt, bei der ein elektromotorischer Antrieb für die Einstellung des Abstandes zwischen dem Werkzeug (Schneidkopf) und dem Werkstück dient. Als Antrieb wird ein Elektromotor in Verbindung mit einer Gewindespindel verwendet.

Aus der DE 699 26 679 T2 ist ein Verfahren zur Einstellung der Fokusposition eines Laserstrahls einer Laserschneidmaschine bekannt, die durch Veränderung des Abstands zwischen einer Sammellinse und einer Austrittsdüse erreicht wird. Die Sammellinse ist örtlich fixiert. Ein Antriebsmechanismus bewegt den Laserkopf unabhängig von der Sammellinse auf und ab, wodurch der Abstand zwischen der Sammellinse und der Austrittsdüse eingestellt wird. Als Antriebsvorrichtung für den Laserkopf wird ein Motor verwendet, der eine Kugelgewindespindel antreibt.

Elektrische Motoren haben einen gewissen Platzbedarf, erzeugen Unwuchten und tragen zu einer größeren Bauform der Vorrichtung bei und führen so zu einer geringeren Maschinendynamik.

Alternativ zu elektrischen Motoren haben sich sogenannte Tauchspulenantriebe (auch als Voice-Coil-Aktoren bezeichnet) durchgesetzt, insbesondere wenn es auf die Erzeugung präziser Linearbewegungen ankommt.

Ein derartiger Tauchspulenantrieb wird beispielsweise in der EP 0 868 962 A2 für die dreidimensionale Bewegung eines Werkzeuges vorgeschlagen. Für die Bewegung in horizontaler Ebene sind Verschiebetische vorgesehen, die jeweils zwischen zwei Tauchspulenantrieben angeordnet sind. Für die Bewegung in der vertikalen Richtung ist nur ein Tauchspulenantrieb vorgesehen, an dem das Werkzeug montiert ist.

Eine Vorrichtung gemäß dem Oberbegriff des Anspruchs 1 ist aus US 2010/0044355 A1 bekannt.

Ein Verfahren und eine gattungsgemäße Vorrichtung in Form einer thermischen Bearbeitungsmaschine für die Bearbeitung von Wafern mittels Laser sind aus US 2005/0184036 A1 bekannt. Hierbei ist der Tauchspulenantrieb zur Fokussierung des Linsensystems entlang der optischen Achse vorgesehen, wobei Tauchspulenantriebe sowohl neben als auch ober- oder unterhalb des Linsensystems angeordnet sind.

### Technische Aufgabe

Sowohl die Anordnung des Werkzeuges zwischen zwei Tauchspulenantrieben als auch die separate Anordnung der Tauchspulen ober-, unterhalb oder neben der Linse erfordert einen hohen Platzbedarf und kann bei schnellen Bewegungen zu Unwuchten beitragen.

Der Erfindung liegt daher die Aufgabe zugrunde, einen Antrieb für eine thermische Bearbeitungsmaschine bereitzustellen, der eine kompakte Bauform und eine hohe Maschinendynamik ermöglicht.

### Allgemeine Beschreibung der Erfindung

Diese Aufgabe wird ausgehend von einer Vorrichtung der eingangs genannten Gattung erfindungsgemäß durch eine Vorrichtung mit den Merkmalen des Anspruchs 1 gelöst.

Bei der erfindungsgemäßen Vorrichtung ist für die Einstellung des Arbeitsabstands bei der thermischen Bearbeitung von Werkstücken ein Tauchspulenantrieb vorgesehen. Tauchspulenantriebe sind aus dem Stand der Technik an und für sich bekannt. Die Antriebsbewegung beruht darauf, dass eine stromdurchflossene Spule in einem Magnetfeld relativ zu den Magnetfeldlinien bewegbar ist. Die Antriebsbewegung wird dabei entweder durch Bewegung der Spule selbst oder des das Magnetfeld erzeugenden Magneten ausgeführt. Im Gegensatz zur Abstandseinstellung beispielsweise mittels Motor und Gewindespindel wird durch den Einsatz des Tauchspulenantriebs eine besonders kompakte und leichte Bauform der Vorrichtung ermöglicht. Tauchspulenantriebe sind verschleißarm, erzeugen keinen Abrieb und erlauben eine schnelle, dynamische Einstellung des Arbeitsabstandes.

Ein wesentliches Merkmal der Erfindung besteht darin, dass der Tauchspulenantrieb einen Hohlraum aufweist, in welchem das mit dem Tauchspulenantrieb in Wirkverbindung stehende Bearbeitungswerkzeug oder ein Teil desselben angeordnet ist. Der innerhalb des Hohlraums untergebrachte Teil des Werkzeugs müsste ansonsten außerhalb des Tauchspulenantriebs angeordnet sein. Daher ermöglicht diese Anordnung eine besonders kompakte Bauform. Das Bearbeitungswerkzeug oder ein Teil desselben wird vollständig von der Tauchspule umschlossen; es kann aber auch aus dem Hohlraum herausragen.

Bei dem Bearbeitungswerkzeug handelt es sich beispielsweise um einen Laser oder um einen Brenner. Die Spule ist einteilig oder mehrteilig ausgeführt. Im einfachsten Fall handelt es sich bei dem Magneten um einen Ringmagneten. Der Magnet kann aber auch aus mehreren Ringmagneten oder aus mehreren magnetischen Bauteilen zusammengesetzt sein. Der Magnet kann auch eine Spule sein.

Zur Erzielung einer erhöhten Maschinendynamik und Vermeidung von Unwuchten hat es sich als besonders günstig erwiesen, wenn das Bearbeitungswerkzeug oder ein Teil desselben entlang einer Bewegungsachse geführt wird und der Tauchspulenantrieb symmetrisch um diese Bewegungsachse angeordnet ist.

Die mechanische Verbindung erfolgt mittels einer in den Hohlraum ragenden Hülse.

Die Hülse dient zur Befestigung des Bearbeitungswerkzeugs oder eines Teils desselben und kann gleichzeitig als Adapter für verschiedene Abmessungen des Bearbeitungswerkzeugs oder eines Teils desselben verwendet werden.

Eine bevorzugte Variante der Vorrichtung sieht vor, dass der Hohlraum als Innenbohrung eines Permanentmagneten ausgebildet ist.

Im Gegensatz zur Erzeugung eines Magnetfeldes beispielsweise mittels Elektromagneten wird bei der Verwendung eines Permanentmagneten keine weitere elektrische Versorgung und keine Steuerung für den Magneten benötigt.

Vorzugsweise sind zur Einstellung des Arbeitsabstandes eine erste Einrichtung zur Grobeinstellung und eine zweite Einrichtung zur Feineinstellung vorgesehen, wobei die erste Einrichtung einen Grobeinstellungsantrieb und die zweite Einrichtung einen Feineinstellungsantrieb, der von der Tauchspule gebildet wird, aufweist.

Die Grob- und Feineinstellung erfolgen vorzugsweise mit unterschiedlichen Geschwindigkeiten. Zur Einstellung des Arbeitsabstandes wird zunächst eine Grobeinstellung vorgenommen, und die Feineinstellung wird anschließend mittels Tauchspulenantrieb ausgeführt. Eine hohe Geschwindigkeit bei der Grobeinstellung führt zur Verkürzung der Einrichtungszeit, die dynamische Feineinstellung ermöglicht, dass auch geringe Unebenheiten des Werkstückes, die zu Ungenauigkeiten im Schneidprozess führen, rasch berücksichtigt werden können.

Es hat sich bewährt, wenn der Hohlraum durchgehend zylinderförmig ausgeführt ist und einen Durchmesser von im Bereich von 20 mm bis 70 mm aufweist.

Ein durchgängiger Hohlraum ist einfach zu fertigen. Bei der thermischen Bearbeitung werden typischerweise Werkzeuge eingesetzt, deren seitliche Abmessungen mehr als 20 mm betragen. Bei einem Hohlraumdurchmesser von weniger als 20 mm wären diese gängigen Werkzeuge mit dem erfindungsgemäßen Antrieb nicht mehr bedienbar. Bei Durchmessern von mehr als 150 mm ergeben sich hohe Gewichte für den Antrieb, die die Maschinendynamik verringern.

Es hat sich bewährt, wenn der Hubbereich des Tauchspulenantriebs 5 bis 30 mm beträgt.

Dieser Hubbereich eignet sich insbesondere für die Feineinstellung.

In einer vorteilhaften Ausgestaltung der Vorrichtung ist das Bearbeitungswerkzeug ein Laser, der mindestens eine Linse aufweist, welche als Teil des Bearbeitungswerkzeugs mit dem Tauchspulenantrieb mechanisch verbunden und im Hohlraum angeordnet ist.

Die Anordnung der Linse innerhalb des Hohlraums des Tauchspulenantriebs ermöglicht einen besonders kompakten Aufbau des Antriebs der Fokussiereinheit des Lasers. Sie kann in einen fasentauglichen Laserkopf mit seitlicher Linsenverstellung integriert sein. Die Positionierung der Linse relativ zur Werkstückoberfläche oder einem anderen strahlformenden optischen Bauteil wird zur Fokussierung des Laserstrahls mittels Tauchspulenantrieb geregelt und ermöglicht kurze Einrichtzeiten.

Es ist vorgesehen, dass die Linse mit der bewegbar gelagerten Spule des Tauchspulenantriebs verbunden ist.

Die Linse ist innerhalb des Hohlraums des Magneten entlang der Bewegungsachse bewegbar gelagert und sie wird mittels der Spule bewegt. Die mechanische Verbindung zwischen Linse und Spule erfolgt mittels einer in den Hohlraum hineinragenden und entlang der Bewegungsachse bewebaren Hülse die gleichzeitig zur Halterung der Linse dient.

Auf diese Weise ist berücksichtigt, dass die Spule und der Magnet des Tauchspulenantriebs relativ zueinander beweglich sind und das Bearbeitungswerkzeug oder ein Teil desselben an der Spule befestigt ist.

Es hat sich dabei als günstig erwiesen, wenn der Tauchspulenantrieb ein Druckfenster aufweist, das den Hohlraum nach außen abdichtet.

Dadurch wird eine dynamische Einstellung des Arbeitsabstandes auch bei erhöhten oder erniedrigten Gasdrücken außerhalb des Hohlraums ermöglicht, wie sie beispielsweise während des Schneidprozesses auftreten (sogenannter Schneiddruck).

In einer weiteren vorteilhaften Ausgestaltung der Vorrichtung ist das Bearbeitungswerkzeug ein Brenner, der einen Brennerschaft und einen mit dem Brennerschaft verbundenen Brennerkopf aufweist, wobei der Brennerschaft mit dem Tauchspulenantrieb mechanisch verbunden ist und durch den Hohlraum hindurchragt.

Bei dem Brenner handelt es sich um einen Brenner zum Schweißen, Schneiden, Markieren, Löten oder Flämmen.

Nachfolgend wird die Erfindung anhand von Ausführungsbeispielen und einer Zeichnung näher beschrieben, in der Zeichnung zeigt im Einzelnen in schematischer Darstellung:
- **Figur 1**: eine erste Ausführungsform der erfindungsgemäßen Vorrichtung mit Tauchspulenantrieb für eine Bearbeitungsmaschine zur thermischen Laserbearbeitung,
- **Figur 2**: eine zweite Ausführungsform der erfindungsgemäßen Vorrichtung mit Tauchspulenantrieb für eine Brennschneidmaschine mit Schneidbrenner, und
- **Figur 3**: eine nicht unter den Schutzbereich des Anspruchs 1 fallende Vorrichtung mit einem alternativen Tauchspulenantrieb für eine Bearbeitungsmaschine zur thermischen Laserbearbeitung.

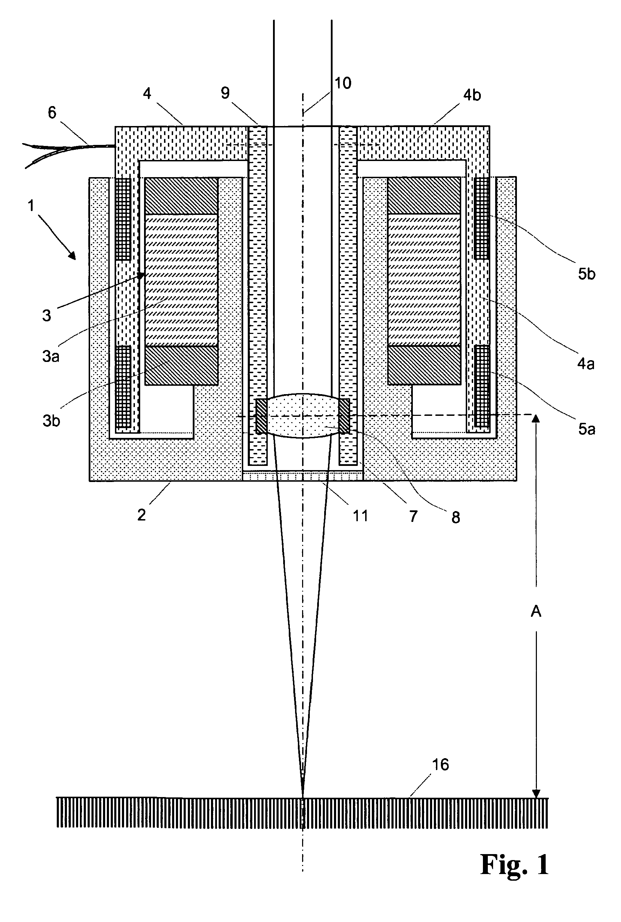

**Figur 1** zeigt einen Antrieb zur Fokussierung eines Laserstrahls einer Laserbearbeitungsmaschine in Form eines Tauchspulenantriebs, dem insgesamt die Bezugsziffer 1 zugeordnet ist. Der Tauchspulenantrieb 1 setzt sich zusammen aus einem Gehäuseteil 2, in dem ein Permanentmagnet 3 mit einem Nordpol 3a und einem Südpol 3b ortsfest gelagert ist. Der Magnet 3 erzeugt ein Magnetfeld, in dem sich zwei Spulen 5a, 5b befinden, die in Richtung der Bewegungsachse 10 beabstandet zueinander auf einem Träger 4 befestigt sind. Der Träger 4 weist eine umlaufende Seitenwand 4a auf, die mit einem nach innen ragenden Flansch 4b verbunden ist. Der Träger 4 übergreift den Magneten bügelartig. Die Seitenwand 4a des Trägers 4 dient zur Aufnahme der Spulen 5a, 5b. An dem Träger 4 ist ein Verbindungselement in Form einer Hülse 9 angebracht, die unter Belassung eines ringförmigen Arbeitsluftspalts in den Hohlraum 7 ragt und entlang der Bewegungsachse 10 frei beweglich gelagert ist. Beide Spulen 5a, 5b sind über die Anschlüsse 6 mit einer Spannungsquelle (nicht dargestellt) verbunden.

Wesentlich für die vorliegende Erfindung ist, dass das Gehäuse 2 einen zentrischen, zylindrischen Hohlraum 7 umschließt, innerhalb dessen eine eingefasste Linse 8, die zur Fokussierung des Laserstrahls dient, angeordnet ist. Die Linse 8 ist in der Hülse 9 montiert, die innerhalb des Hohlraums 7 entlang der Bewegungsachse 10 auf- und abbewegt werden kann. Die Hülse 9 ist mit dem Flansch 4b verschraubt. Bei Anlegen eines Stromes an den Spulen 5a, 5b kommt es bedingt durch die Lorentzkraft zu einer Kraftwirkung auf die Spulen 5a, 5b und damit zu einer Bewegung des Trägers 4 und der Hülse 9 mitsamt der darin montierten Linse 8. Durch Regelung des Stromes wird der Arbeitsabstand A zwischen der Linse 8 und der Werkstückoberfläche 16 und damit die Fokuslage des Laserstrahls festgelegt. Der Hohlraum 7 ist durch ein Druckfenster 11 nach außen abgedichtet, so dass ein Eindringen von Schneidgasen in den Hohlraum 7 und eine Beeinträchtigung der Linse 8 verhindert wird.

Der maximale Hub der Spulen 5a, 5b im Arbeitsspalt beträgt 20 mm. Der Außendurchmesser des gesamten Tauchspulenantriebs 1 liegt bei 110 mm und die Höhe im nicht ausgefahrenen Zustand bei 115 mm. Der Innendurchmesser des Hohlraumes 7 beträgt 63 mm und der Außendurchmesser der Hülse 9 beträgt 60 mm und sein Innendurchmesser 54 mm. Der Träger 4 und die Hülse 9 bestehen aus Aluminium. Bei der Linse 8 handelt es sich um eine Fokussierlinse aus Quarzglas. Der Antrieb 1 ist ausgelegt für eine Spitzenkraft bis 120 N. Er gewährleistet eine hohe Wiederhol- und Positioniergenauigkeit im Nanometerbereich und ist frei von Hysterese.

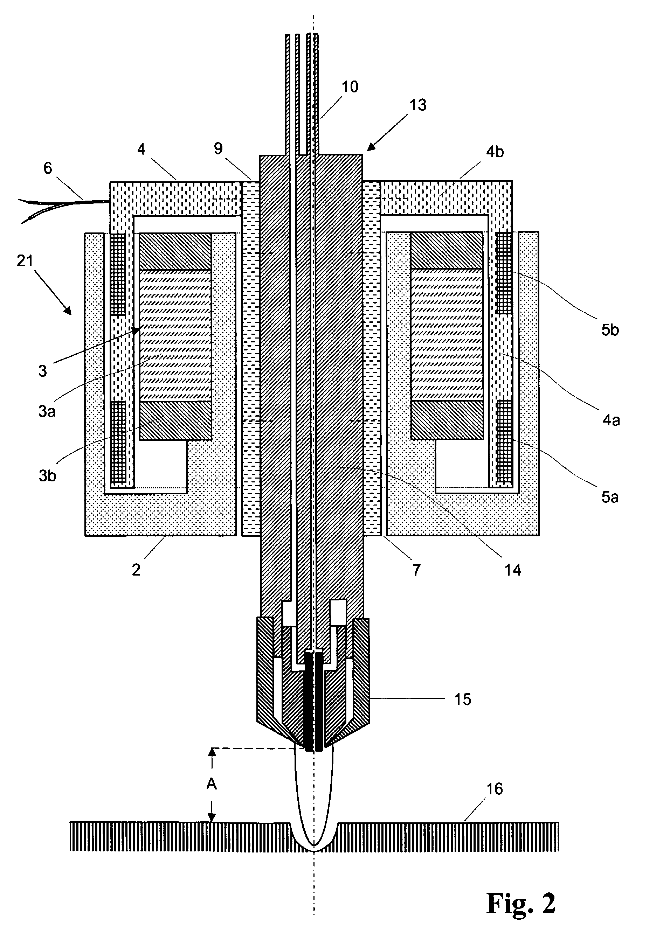

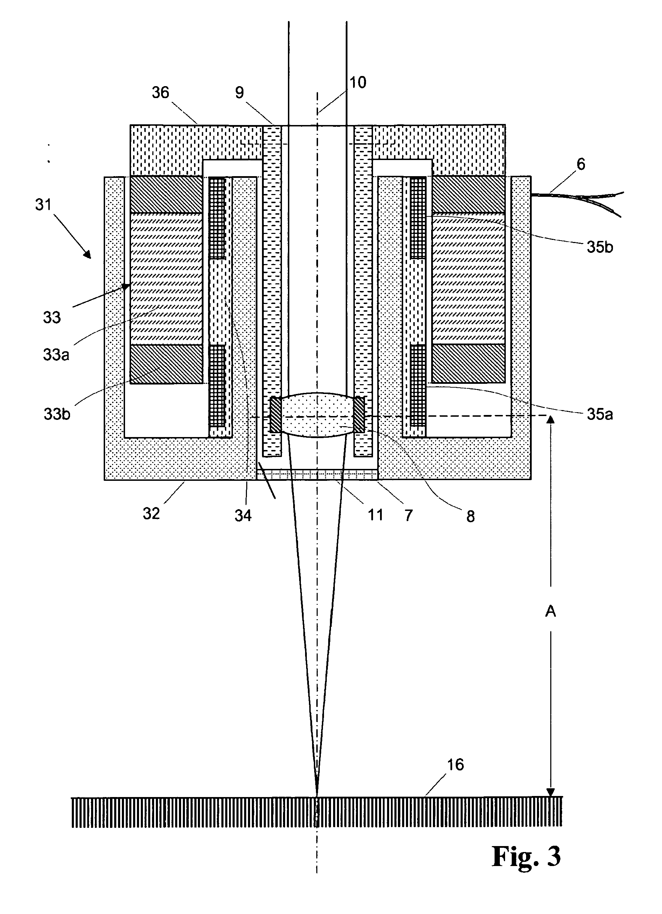

Sofern in den Figuren 2 und 3 dieselben Bezugsziffern wie in Figur 1 verwendet sind, so sind damit baugleiche oder äquivalente Bauteile und Bestandteile bezeichnet, wie sie oben anhand der Beschreibung der ersten Ausführungsform des erfindungsgemäßen Tauchspulenantriebs näher erläutert sind.

**Figur 2** zeigt eine zweite Ausführungsform der erfindungsgemäßen Vorrichtung, bei der als Bearbeitungswerkzeug ein Brenner 13 verwendet wird. Der Brenner 13 besteht aus einem Brennerschaft 14 und einem Brennerkopf 15. Wesentlich für die vorliegende Erfindung ist, dass sich der Brennerschaft 14 durch den zentralen Hohlraum 7 des Tauchspulenantriebs 21 erstreckt.

Der Tauchspulenantrieb 21 wird zur Einstellung des Arbeitsabstandes A zwischen Brenner 13 und Werkstückoberfläche 16 verwendet und ist im Ausführungsbeispiel symmetrisch um den Brennerschaft 14 angeordnet.

Der Tauchspulenantrieb 21 setzt sich zusammen aus einem umlaufenden und im Querschnitt U-förmigen Gehäuseteil 2, in dem ein Permanentmagnet 3 mit einem Nordpol 3a und einem Südpol 3b ortsfest gelagert ist. Der Magnet 3 erzeugt ein Magnetfeld, in dem sich zwei in Richtung der Bewegungsachse gesehen übereinander und beabstandet voneinander angeordnete Spulen 5a, 5b befinden, die auf einem Träger 4 befestigt sind. Der Träger 4 weist eine umlaufende Seitenwand 4a auf, die mit einem nach innen ragenden Flansch 4b verbunden ist. Der Träger 4 übergreift den Magneten bügelartig. Die Seitenwand 4a dient zur Aufnahme der Spulen 5a, 5b. Beide Spulen 5a, 5b sind über die Anschlüsse 6 mit einer Spannungsquelle (nicht dargestellt) verbunden. An dem Flansch 4b ist eine Hülse 9 angebracht, die in den Hohlraum 7 ragt und entlang der Bewegungsachse 10 frei beweglich gelagert ist.

Die Hülse 9 ist sowohl mit dem Träger 4 als auch mit dem Brennerschaft 14 verschraubt. Bei Anlegen eines Stromes an den Spulen 5a, 5b kommt es bedingt durch die Lorentzkraft zu einer Kraftwirkung auf die Spulen 5a, 5b und damit zu einer Bewegung des Trägers 4, der Hülse 9 und des darin montierten Brenners 13 entlang der Bewegungsachse 10. Durch Regelung des Stromes an den Spulen 5a, 5b wird der Abstand des Brenners 13 von der Werkstückoberfläche 16 eingestellt.

Der maximale Hub der Spulen 5a, 5b im Arbeitsspalt beträgt 25 mm. Der Außendurchmesser des gesamten Tauchspulenantriebs 21 liegt bei 135 mm und die Höhe im nicht ausgefahrenen Zustand bei 130 mm. Der Innendurchmesser des Hohlraumes 7 beträgt 63 mm und der Außendurchmesser der Hülse 9 beträgt 60mm und sein Innendurchmesser 54 mm. Der Träger 4 und die Hülse 9 bestehen aus Aluminium. Bei dem Brenner handelt es sich um einen Autogenschneidbrenner. Der Antrieb ist ausgelegt für eine Spitzenkraft bis 1.110 N. Er gewährleistet eine hohe Wiederhol- und Positioniergenauigkeit im Nanometerbereich und ist frei von Hysterese.

Figur 3 zeigt eine nicht unter den Schutzbereich des Anspruchs 1 fallende Vorrichtung mit einem alternativen Tauchspulenantrieb 31 für eine Bearbeitungsmaschine zur thermischen Laserbehandlung. Der Tauchspulenantrieb 31 setzt sich zusammen aus einem Gehäuseteil 32, in dem zwei Spulen 35a, 35b ortsfest und in Richtung der Bewegungsachse beabstandet und übereinander gelagert sind. Die Spulen 35a, 35b sind auf einem Träger 34 befestigt und erzeugen ein Magnetfeld, in dem sich ein Magnet 33 mit einem Nordpol 33a und einem Südpol 33b befindet. Der Magnet 33 ist mit einem Träger 36 verbunden, an dem seinerseits ein Verbindungselement in Form einer Hülse 9 angebracht ist, die unter Belassung eines ringförmigen Arbeitsluftspalts in den Hohlraum 7 ragt und entlang der Bewegungsachse 10 frei beweglich gelagert ist. Beide Spulen 35a, 35b sind über die Anschlüsse 6 mit einer Spannungsquelle (nicht dargestellt) verbunden.

Das Gehäuse 32 umschließt einen zentrischen, zylindrischen Hohlraum 7, innerhalb dessen eine eingefasste Linse 8, die zur Fokussierung des Laserstrahls dient, angeordnet ist. Die Linse 8 ist in der Hülse 9 montiert, die innerhalb des Hohlraums 7 entlang der Bewegungsachse 10 auf- und abbewegt werden kann. Die Hülse 9 ist mit dem Träger 36 verschraubt. Bei Anlegen eines Stromes an den Spulen 35a, 35b kommt es bedingt durch die Lorentzkraft zu einer Kraftwirkung auf den Magneten 33 und damit zu einer Bewegung des Trägers 36 und der Hülse 9 mitsamt der darin montierten Linse 8. Durch Regelung des Stromes wird der Arbeitsabstand A zwischen der Linse 8 und der Werkstückoberfläche 16 damit die Fokuslage des Laserstrahls festgelegt. Der Hohlraum 7 ist durch ein Druckfenster 11 nach außen abgedichtet, so dass ein Eindringen von Schneidgasen in den Hohlraum 7 und eine Beeinträchtigung der Linse 8 verhindert wird.

Der maximale Hub der Spulen 35a, 35b im Arbeitsspalt beträgt 20 mm. Der Außendurchmesser des gesamten Tauchspulenantriebs 31 liegt bei 110 mm und die Höhe im nicht ausgefahrenen Zustand bei 115 mm. Der Innendurchmesser des Hohlraumes 7 beträgt 63 mm und der Außendurchmesser der Hülse 9 beträgt 60 mm und ihr Innendurchmesser 54 mm. Der Träger 4 und die Hülse 9 bestehen aus Aluminium. Bei der Linse 8 handelt es sich um eine Fokussierlinse aus Quarzglas. Der Antrieb 31 ist ausgelegt für eine Spitzenkraft bis 120 N. Er gewährleistet eine hohe Wiederhol- und Positioniergenauigkeit im Nanometerbereich und ist frei von Hysterese.

## Patentansprüche

1. Vorrichtung für die thermische Bearbeitung eines Werkstücks mit einem senkrecht zur Werkstückoberfläche (16) verstellbaren thermischen Bearbeitungswerkzeug, und mit einem Antrieb (1; 21) zur Einstellung eines Arbeitsabstands (A), wobei der Antrieb (1; 21) zur Arbeitsabstandseinstellung mit dem Bearbeitungswerkzeug (13) oder einem Teil desselben (8) in Wirkverbindung steht, und als Tauchspulenantrieb (1; 21) ausgebildet ist, aufweisend einen Magneten (3), der ein Magnetfeld erzeugt, und mit einer im Magnetfeld angeordneten Spule (5a; 5b), wobei Magnet (3) und Spule (5a; 5b) in Abhängigkeit von einem elektrischen Strom relativ zueinander entlang einer Bewegungsachse (10) bewegbar sind, wobei der Magnet (3) einen Hohlraum (7) aufweist, in dem das mit dem Tauchspulenantrieb (1; 21) mechanisch verbundene Bearbeitungswerkzeug (13) oder ein Teil desselben (8) angeordnet ist, **dadurch gekennzeichnet, dass** die mechanische Verbindung mittels einer in den Hohlraum (7) ragenden Hülse (9) erfolgt, und dass die Hülse (9) an einem den Magneten (3) bügelartig übergreifenden Träger (4) angebracht ist, auf dem die Spule (5a; 5b) befestigt ist.

2. Vorrichtung nach Anspruch 1 **dadurch gekennzeichnet, dass** das Bearbeitungswerkzeug (13) oder Teile desselben (8) entlang der Bewegungsachse (10) geführt wird und dass der Tauchspulenantrieb (1; 21) symmetrisch um diese Bewegungsachse (10) angeordnet ist.

3. Vorrichtung nach einem der vorhergehenden Ansprüche, **dadurch gekennzeichnet, dass** der Hohlraum (7) als Innenbohrung eines Permanentmagneten ausgebildet ist.

4. Vorrichtung nach einem der vorhergehenden Ansprüche, **dadurch gekennzeichnet, dass** zur Einstellung des Arbeitsabstandes (A) eine erste Einrichtung zur Grobeinstellung und eine zweite Einrichtung zur Feineinstellung vorgesehen sind, wobei die erste Einrichtung einen Grobeinstellungsantrieb und die zweite Einrichtung einen Feineinstellungsantrieb, der von der Tauchspule (1; 21) gebildet wird, aufweist.

5. Vorrichtung nach einem der vorhergehenden Ansprüche, **dadurch gekennzeichnet, dass** der Hohlraum (7) durchgehend zylinderförmig ausgeführt ist und einen Durchmesser im Bereich von 20 mm bis 70 mm aufweist.

6. Vorrichtung nach einem der vorhergehenden Ansprüche, **dadurch gekennzeichnet, dass** für den Tauchspulenantrieb (1; 21) ein Hubbereich von 5 bis 30 mm vorgesehen ist.

7. Vorrichtung nach einem der vorhergehenden Ansprüche, **dadurch gekennzeichnet, dass** das Bearbeitungswerkzeug ein Laser ist, der mindestens eine Linse (8) aufweist, welche als Teil des Bearbeitungswerkzeugs mit dem Tauchspulenantrieb (1) mechanisch verbunden ist und in dem Hohlraum (7) angeordnet ist.

8. Vorrichtung nach Anspruch 7, **dadurch gekennzeichnet, dass** die Linse (8) mit der beweglich gelagerten Spule (5a; 5b) des Tauchspulenantriebs (1) verbunden ist.

9. Vorrichtung nach einem der Ansprüche 7 oder 8, **dadurch gekennzeichnet, dass** der Tauchspulenantrieb (1; 21) ein Druckfenster (11) aufweist, das den Hohlraum (7) nach außen abdichtet.

10. Vorrichtung nach einem der Ansprüche 1 bis 6, **dadurch gekennzeichnet, dass** das Bearbeitungswerkzeug ein Brenner (13) ist, der einen Brennerschaft (14) und einen mit dem Brennerschaft (14) verbundenen Brennerkopf (15) aufweist, wobei der Brennerschaft (14) mit dem Tauchspulenantrieb (21) mechanisch verbunden ist und durch den Hohlraum (7) hindurchragt.

## Claims

1. An apparatus for the thermal processing of a workpiece, the apparatus comprising a thermal processing tool which is supported so as to be adjustable in a direction perpendicular to the workpiece surface (16), and a drive (1; 21) adjusting a work distance of the thermal processing tool (13) from the surface, wherein the drive (1; 21) adjusting the work distance being in operative communication with the thermal processing tool (13) or a part thereof (8) is configured as a voice coil actuator (1; 21), comprising a magnet (3) that produces a magnetic field, and a coil (5a; 5b) arranged in the magnetic field, said magnet (3) and said coil (5a; 5b) being movable relative to each other along a movement axis (10) in response to an electric current, wherein the magnet (3) has a cavity (7), and the thermal processing tool (13) or a part thereof (8) being supported in the cavity and being mechanically connected to the voice coil actuator (1; 21), **characterized in that** the mechanical connection is made by a sleeve (9) projecting into the cavity (8), said sleeve (9) is mounted on a carrier (4), which grips over the magnet (3) in a manner of a bow, whereby the coil (5a; 5b) is fixed on said carrier.

2. The apparatus according to claim 1, **characterized in that** the processing tool (13), or parts thereof (8), is guided along the movement axis (10), and the voice coil actuator (1; 21) is symmetrically arranged about said movement axis (10).

3. The apparatus according to any one of the preceding claims, **characterized in that** said cavity (7) is configured as an inner bore of a permanent magnet.

4. The apparatus according to any one of the preceding claims, **characterized in that** the adjustment of the work distance (A) is accomplished using a first device providing coarse adjustment and a second device providing fine adjustment, the first device comprising a coarse adjustment drive and the second device comprising a fine adjustment drive which is formed by the voice coil (1; 21).

5. The apparatus according to any one of the preceding claims, **characterized in that** the cavity (7) is made continuously cylindrical and has a diameter in the range of 20 mm to 70 mm.

6. The apparatus according to any one of the preceding claims, **characterized in that** the voice coil actuator (1; 21) has a stroke range of 5 mm to 30 mm.

7. The apparatus according to any one of the preceding claims, **characterized in that** the processing tool is a laser that comprises at least one lens (8) which as part of the processing tool is mechanically connected to the voice coil actuator (1) and is arranged in the cavity (7).

8. The apparatus according to claim 7, **characterized in that** the lens (8) is connected to the movably supported coil (5a; 5b) of the voice coil actuator (1).

9. The apparatus according to one of claims 7 or 8, **characterized in that** the voice coil actuator (1; 21) comprises a pressure window (11) that seals the cavity (7) outwardly.

10. The apparatus according to any one of claims 1 to 6, **characterized in that** the processing tool is a torch (13) which comprises a torch shaft (14) and a torch head (15) connected to the torch shaft (14), the torch shaft (14) being mechanically connected to the voice coil actuator (21) and projecting through the cavity (7).

## Revendications

1. Dispositif pour le traitement thermique d'une pièce d'usinage comprenant un outil de traitement thermique ajustable perpendiculairement à la surface de pièce (16) et un entraînement (1; 21) pour régler une distance de travail (A), l'actionneur (1; 21) étant en liaison active avec l'outil de traitement (13) ou une partie (8) de ce dernier pour le réglage de la distance de travail ou étant conçu comme un actionneur à bobine mobile (1; 21), présentant un aimant (3) qui génère un champ magnétique, et muni d'une bobine (5a; 5b) disposée dans le champ magnétique, ledit aimant (3) et la bobine (5a; 5b) étant mobiles l'un par rapport à l'autre le long d'un axe de déplacement (10) en fonction d'un courant électrique, l'aimant (3) présentant une cavité (7), dans laquelle est disposé l'outil de traitement (13) relié mécaniquement à l'actionneur à bobine mobile (1 ; 21) ou une partie (8) de ce dernier, **caractérisé en ce que** la connexion mécanique s'effectue au moyen d'un manchon (9) s'engageant dans la cavité (7) et **en ce que** le manchon (9) est placé sur un support (4) recouvrant l'aimant (3) en forme d'étrier, et sur lequel est fixée la bobine mobile (5a ; 5b).

2. Dispositif selon la revendication 1, **caractérisé en ce que** l'outil d'usinage (13) ou des parties de ce dernier (8) sont guidés le long de l'axe de déplacement (10) et **en ce que** l'actionneur à bobine mobile (1; 21) est disposé symétriquement autour de cet axe de déplacement (10).

3. Dispositif selon l'une des revendications précédentes, **caractérisé en ce que** la cavité (7) est réalisée comme un perçage interne d'un aimant permanent.

4. Dispositif selon l'une des revendications précédentes, **caractérisé en ce que** pour le réglage de la distance de travail (A), il est prévu un premier dispositif pour le réglage grossier, et un second dispositif pour le réglage fin, ledit premier dispositif présentant un actionneur de réglage grossier et le second dispositif un actionneur de réglage fin qui sont formés par la bobine mobile (1; 21).

5. Dispositif selon l'une des revendications précédentes, **caractérisé en ce que** la cavité (7) est réalisée en continu et de forme cylindrique et présente un diamètre compris entre 20 mm et 70 mm.

6. Dispositif selon l'une des revendications précédentes, **caractérisé en ce qu'**il est prévu, pour l'actionneur à bobine mobile (1; 21), une plage de course de 5 à 30 mm.

7. Dispositif selon l'une des revendications précédentes, **caractérisé en ce que** l'outil de traitement est un laser ayant au moins une lentille (8), qui, en tant que partie de l'outil de traitement, est relié mécaniquement à l'actionneur à bobine mobile (1) et est disposé dans la cavité (7).

8. Dispositif selon la revendication 7, **caractérisé en ce que** la lentille (8) est reliée à la bobine mobile (5a ; 5b) de l'actionneur à la bobine mobile (1) de l'actionneur.

9. Dispositif selon l'une des revendications 7 ou 8, **caractérisé en ce que** l'actionneur à bobine mobile (1 ; 21) présente une fenêtre de pression qui étanchéifie la cavité (7) vers l'extérieur.

10. Dispositif selon l'une des revendications 1 à 6, **caractérisé en ce que** l'actionneur à bobine mobile
est un brûleur (13), qui présente une tige de brûleur (14) et une tête de brûleur (15), la tige de brûleur (14) étant reliée mécaniquement à l'actionneur à bobine mobile (21) s'engageant dans la cavité (7).
